# EUROPEAN PATENT APPLICATION

(11) **EP 1 146 487 A2**
(43) Date of publication of application: **17.10.2001**
(21) Application number: 01109175.8
(22) Date of filing: 12.04.2001
(51) Int. Cl.: G07C 9/00

(54) **Optical and smart card identification reader**

(30) Priority: 14.04.2000 US 197121 P
(71) Applicant: BIOCENTRIC SOLUTIONS, INC., Madison, Wisconsin 53717 (US)
(72) Inventor: Janiak, Martin J., Middleton, Massachusetts 01949 (US); Howe, Barry, Middleton, Wisconsin 53558 (US); Schenk, Thomas, Verona, Wisconsin 53593 (US); Ziemba, Francis, Madison, Wisconsin 53717 (US); Depp, Mark, Firchburg, Wisconsin 53711 (US); Humphreys, Matthew, Madison, Wisconsin 53517 (US); Wachter, Greg, Sun Prairie, Wisconsin (US); Booth, Kevin, Verona, Wisconsin 53593 (US); Krueger, Greg, Jefferson, Wisconsin 53549 (US); Wood, Alan, Cottage Grove, Wisconsin 53527 (US)
(74) Representative: Kador & Partner

(57) **Abstract**

A biometric authentication device for use with a data card such as an optical card, a memory chip card, or a smart card. The biometric device includes a fingerprint module having a fingerprint sensor for capturing a user's fingerprint placed onto the fingerprint sensor. The biometric device includes a portion adapted to receive and read a card containing optical or electronic fingerprint information. The biometric device includes processing capabilities to determine a match between the user's fingerprint captured from the fingerprint sensor and the electronic fingerprint information stored on the optical or smart card. Determination ofthe match between the captured fingerprint and the electronic fingerprint information enables biometric verification of identification of the end user. The biometric device is useful in time and attendance, access and control, as well as user identification and verification applications. Programmable software used with the biometric device permits application specific biometric solutions to be developed.

## Description

### CROSS-REFERENCE TO RELATED APPLICATION

This application claims the benefit of U.S. Provisional Application No. 60/197,121 filed April 14, 2000.

### BACKGROUND OF THE INVENTION

The present invention relates generally to biometrics and biometric solutions, and more particularly to a biometric authentication device that compares stored biometric data to live biometric data to verify the identity of a user of the device.

The field of biometrics, or the measuring of a physical characteristic used to recognize the identity or verify the claimed identity of an individual, has emerged as an increasingly reliable methodology for verification (one-to-one) and identification (one-to-many) of individuals. Biometrics has become a very powerful tool in the solving of problems associated with requiring positive identification of individuals.

Live capture biometrics, which is the process of capturing a biometric sample by an interaction between an end user and a biometric system, requires a significant amount of memory, processing power and communication capabilities to quickly and accurately perform the biometric functions assigned. A high level of functionality, and correspondingly, processing power, is required to: read from and write to memory and smart cards; read fingerprint sensors; extract minutia; and compare against smart card or internally stored fingerprint data. Oftentimes, the resultant product may be prohibitively bulky, expensive and complicated so as not to be readily adapted for commercial applications, particularly for those biometric applications that require verification or identification from a variety of locations. Additionally, such devices are not readily adaptable application-to-application, and the entire unit must be reconfigured in order to run the desired biometric application.

However, while the popularity of biometrics and biometric devices is increasing, there is a need for a programmable biometric device that can be used in many applications to solve various access and control, time and attendance, and security problems.

Additionally, there exists the need for a biometric device that is readily adaptable to a network or central database and that can be programmed to perform a biometric verification function for a particular application as part of a network. There also exists the need for a biometric device that can be easily integrated with an application specific software to allow for customized applications of the fingerprint verification and identification technology.

### SUMMARY OF THE INVENTION

The present invention provides a biometric device that overcomes the aforementioned problems and provides a versatile biometric device having many applications in the development of biometric solutions.

In accordance with one aspect of the invention, a biometric device is provided that includes a housing having a slot to receive a data card, the data card having stored biometric data thereon. The biometric device includes a data card reader within the housing, and a fingerprint identification module (FIM) within the housing to generate live biometric data. A display is connected to the housing, and electronic storage and processing circuitry is in operational association with the data card reader and the FIM. Software is programmed into the electronic storage and processing circuitry to process the stored biometric data and the live biometric data, and to communicate among the data card reader, the FIM and the display.

In accordance with another aspect of the invention, a biometric device for use with a data card having biometric data stored thereon is disclosed. The biometric device includes a housing having a slot to receive the data card therein, and includes a fingerprint sensor recess and a data card recess on the housing. A data card reader is within the housing, the data card reader capable of receiving a data card therein. The data card recess is generally shaped to promote insertion of the data card into the data card reader such that substantially the entire data card may be inserted into the data card reader. The biometric device includes a fingerprint identification module including a fingerprint sensor disposed within and at least partially exposed through the housing such that the fingerprint sensor is accessible through the housing. The fingerprint sensor is substantially at the bottom of the fingerprint sensor recess. The fingerprint sensor recess is generally shaped to promote placement of a user finger on the fingerprint sensor to generate live fingerprint data. The biometric device includes a display visible through the housing, electronic storage and processing circuitry, and software programmed into the electronic storage and processing circuitry. The software compares the stored biometric data and the live biometric data and facilitates communication among the data card reader, the FIM and the display.

In accordance with another aspect of the invention, a method of biometric authentication comprising the steps of providing a biometric device as stated above, and receiving a data card into the slot. The method includes reading the stored fingerprint data on the data card, and receiving a finger onto the FTM. The method includes imaging the finger to generate live fingerprint data and comparing the stored fingerprint data to the live fingerprint data. Finally, a determination is made whether there is a match between the stored fingerprint data and the live fingerprint data.

Various other features, objects and advantages of the present invention will be made apparent from the following detailed description and the drawings.

### BRIEF DESCRIPTION OF THE DRAWINGS

The drawings illustrate one mode presently contemplated for carrying out the invention.

In the drawings:
Fig. 1 is a perspective view illustrating a biometric device and data card comprising stored biometric data in accordance with the present invention where the data card is shown prior to insertion into the device.
Fig. 2 is a perspective view illustrating the biometric device and data card of Fig. 1 where the data card is shown after insertion into the device and showing a finger placed over a fingerprint sensor.
Figs. 3-5 show various screen displays illustrating functional aspects in accordance with the present invention.
Fig. 6 shows an enlarged partially exploded view of the biometric device of Fig.1 illustrating a fingerprint identification module.
Fig. 7 illustrates another enlarged partially exploded view of the biometric device of Fig. 1 illustrating a display apparatus.
Fig. 8 illustrates another enlarged partially exploded view of the biometric device of Fig. 1 showing a data card reader.
Fig. 9 shows a cross-sectional view of the biometric device taken along line 9-9 of Fig. 1.
Fig. 10 is a functional block diagram illustrating a biometric authentication system in accordance with one aspect of the present invention.
Fig. 11 is a functional block diagram illustrating a biometric authentication system in accordance with one aspect of the present invention.
Fig. 12 is a flow chart illustrating a method of biometric authentication in accordance with one aspect of the present invention.
Fig. 13 is a functional block diagram illustrating abiometric network in accordance with one aspect of the present invention
Fig. 14 is a functional block diagram illustrating a biometric authentication device as part of a server system in accordance with one aspect of the present invention.
Fig. 15 is a functional block diagram illustrating a biometric authentication device as part of a server system in accordance with one aspect of the present invention.

### DETAILED DESCRIPTION OF THE PREFERRED EMBODIMENT

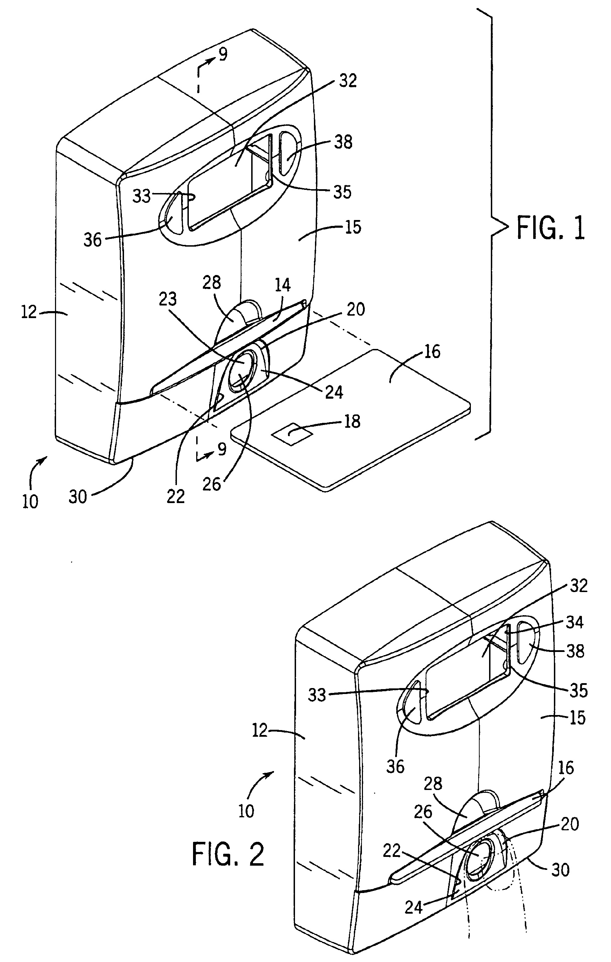

Referring to Figs. 1 and 2, the biometric device of the present invention is shown generally by the numeral 10. The biometric device is used generally in security, access and control, time and attendance applications, and the device generates user information, the user information including user entry time, user exit time, user check-in time and user attendance. The biometric device 10 includes a housing 12 having a slot 14 in a front surface 15 to receive a data card 16 therein (in Fig. 1, data card 16 is shown prior insertion into the biometric device, and in Fig. 2, data card 16 is shown following insertion into the biometric device). Data card 16 can come in any form that is capable of storing fingerprint data for an enrollee. An enrollee is a potential user of the device who has gone through an enrollment process, or the process of collecting biometric samples from a person and storing the biometric samples on the data card for comparison to the end user's biometric sample. Data card 16 can be an optical memory card where a single (or multiple) fingerprint image(s) is/are contained within a 2D barcode symbol, such as a PDF 417, or printed on a plastic card. This finger image is capable of being optically read from the data card. Data card 16 can also include, for example, a memory card that includes a memory chip 18 embedded within the card (chip card). Typically, the chip is capable of storing more information than the optical data card, but also permits the writing of transactional data to the chip while the data card is inserted. The data can be downloaded later to another central location for the particular application. The data can then be erased from the memory card, thereby freeing up space for additional information storage. Additionally, the data card can be a smart card, where transactional data can be collected and stored, but it can also be processed and used directly by the smart card in particular applications. Therefore, a card that is read-only, read-and-write, or read-write-transactional is contemplated by data card 16.

Slot 14 for data card 16 includes a data card recess 28 that is generally shaped to promote insertion (and removal) of the data card into (or out of) the data card reader such that substantially the entire data card may be inserted into (or removed from) the data card reader. Biometric device front surface 15 has a semi-parabolic ridge 20 that defines an inner wall 22 creating a recess 23 within which fingerprint read surface 24 is located. At the center of read surface 24 is a fingerprint sensor 26, and is a part of a fingerprint identification module (FIM), which is described in greater detail below. Fingerprint sensor 26 is at least partially exposed so as to be accessible through front surface 15 of device 10 at substantially the bottom of recess 23. The recess is generally shaped to promote placement of a user finger on the fingerprint sensor to generate live fingerprint data. A user places a finger (shown in phantom in Fig. 2) from which biometric information can be extracted. Fingerprint wall 22 can take on shapes other than those specifically identified, namely the semi-parabolic shape in the current embodiment. However, the shape of ridge 20 and wall 22 is facilitates a user placing a finger onto fingerprint sensor 26 with the finger pointing toward housing end 30. This design promotes comfortable placement of a user's finger while taking a biometric reading. It is understood that the user will use a finger that was used during the enrollment process and encoded on the data card.

Still referring to Figs. 1 and 2, biometric device 10 includes a display 32 that is visible through the housing 12. The device preferably also includes buttons 36 and 38 disposed preferably adjacent display 32, and more particularly, adjacent edges 33 and 34 of display 32. When at least one button is pressed individually, additional functionalities can be provided by the device during its operation. For example, in one preferred embodiment, if button 36 is pressed, software information can be displayed, and if button 38 is pressed, fingerprint data can be re-read (and if desired, an appropriate display can be provided). Additionally, when both buttons are pressed simultaneously (or substantially simultaneously), an additional functionality is provided by the device. For example, in a preferred embodiment, the device can be reset (again, this can be coupled with an appropriate display). Of course, other functionalities can be programmed for association with the buttons.

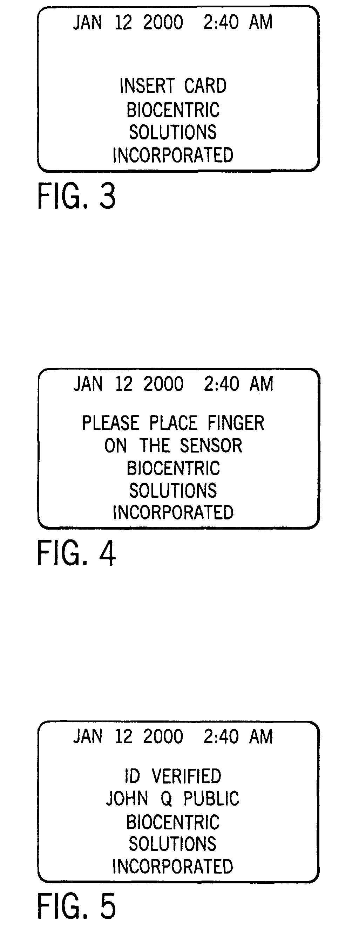

Referring to Figs. 3-5, exemplary screen displays from the biometric device are shown. Such displays are representative of various of the functionalities of the device. For example, in Fig. 3, a user can be prompted to "INSERT CARD", in Fig. 4, a user can be prompted to "PLEASE PLACE FINGER ON THE SENSOR", and in Fig. 5, a user can be informed that their identification has been verified in accordance with the present invention via the screen display "ID VERIFIED". In this manner, the display can be considered an indicator, and other visual or audio indicators are contemplated by the present invention to indicate when and if a match is made to verify an individual. In all displays, it can be seen that the screen display, or more specifically the content of the screen display, can vary to convenience (e.g., time, date, company name and the like can be included). Other messages can be provided to the user. For example, when the device is scanning a user's fingerprint, the message "SCANNING" can also appear. This appears so as to ensure that a user does not move his/her finger prior to completion of the scanning process.

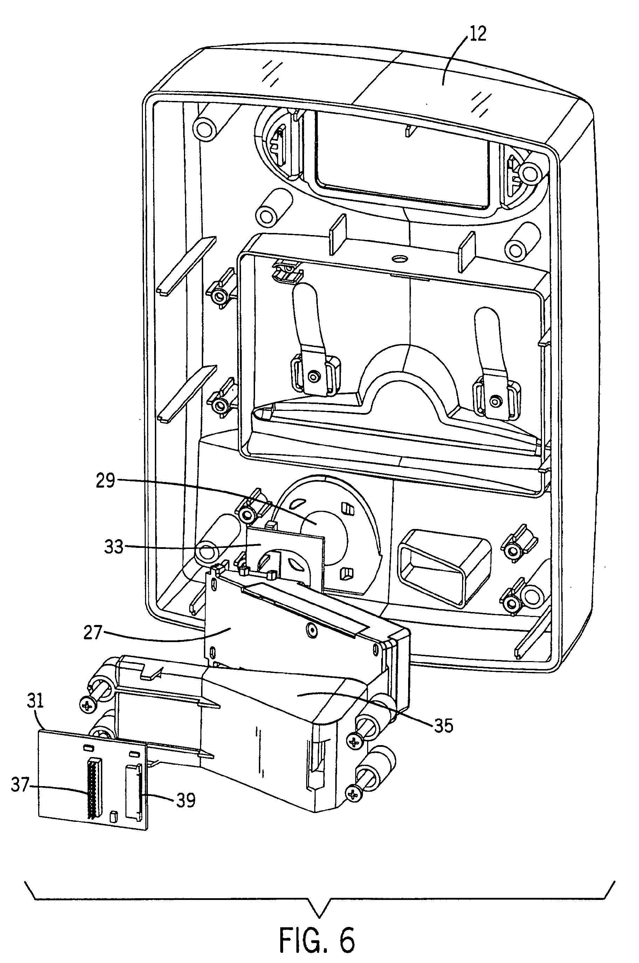

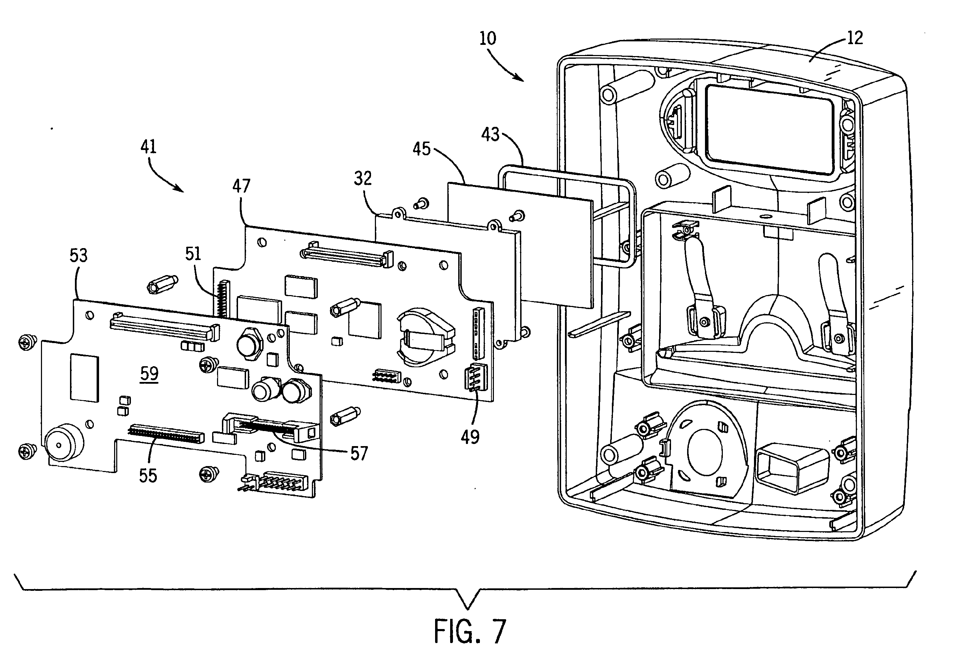

Fig. 6 shows an enlarged exploded view of the interior of the biometric device of Fig.1. The view is taken from a reverse side of housing 12. The figure highlights certain of the assembly components of FIM 27 by illustrating those components in exploded fashion. FIM 27 includes sensor 26 (not shown) which can be exposed through aperture 29 in housing 12 when device 10 is fully assembled. FIM 27 is connected via electrical connector 39 to a printed circuit board (PCB) 31 comprising connector 37 for connection to main electronic processing and storage circuitry (see Fig. 7). Gasket 33 is disposed between housing 12 and FIM 27. Adaptor portion 35 of FIM 27 can provide for improved connection between the FTM and housing 12. One suitable FIM for use in the present invention is model no. PFS-100, available from Polaroid Corporation.

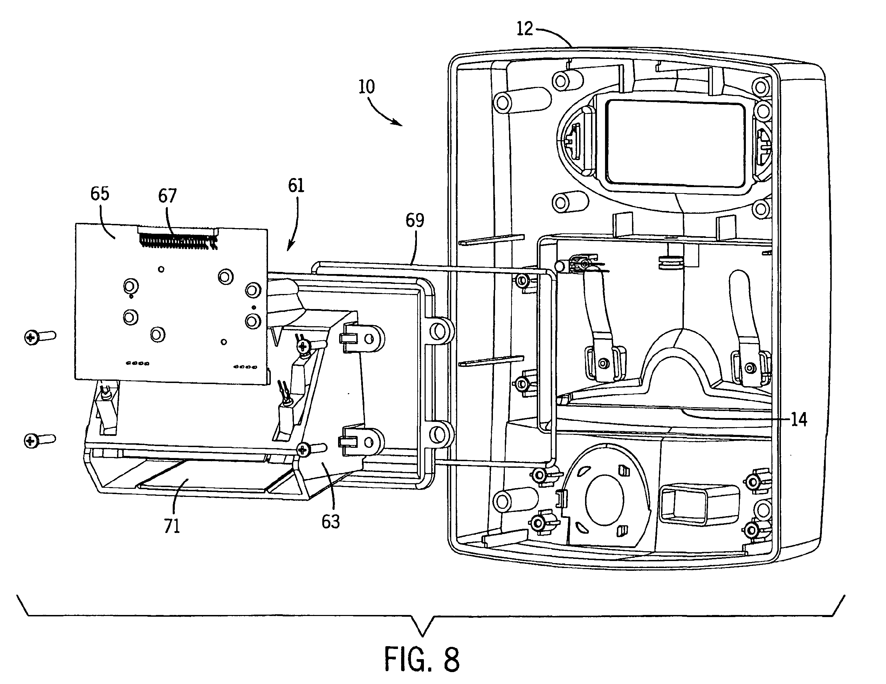

Fig. 7 shows another enlarged exploded view of the interior of the biometric device of Fig. 1. The view is again taken from a reverse side of housing 12. The figure highlights certain of the assembly components of display assembly 41 by illustrating those components in exploded fashion. Display assembly 41 includes display 32, preferably a liquid crystal display (LCD). Gasket 43 is disposed between housing 12 and display 32. Preferably display assembly 41 includes a clear protective cover 45. Display assembly 41 further comprises display PCB 47. Display PCB 47 includes various electrical connectors, for example, connector 49 for connecting display 32 to a data card reader (see Fig. 8) and connector 51 for connecting display 32 to FIM 27. Display PCB 47 is connected to main electronic processing and storage circuitry 53. The main electronic processing and storage circuitry includes various Programmable Logic Components (PLC) and other chip level components, identified generally by the numeral 59, to communicate between the various portions of the biometric device 10 and determine whether there is a match between the live biometric data and the stored biometric data. Display PCB is also connected via connector 55 to card detection and imaging assembly (see Fig. 8), also referred to as a data card reader. The display assembly can include various connections to mount the housing 12 to, for example, a wall or a desk.

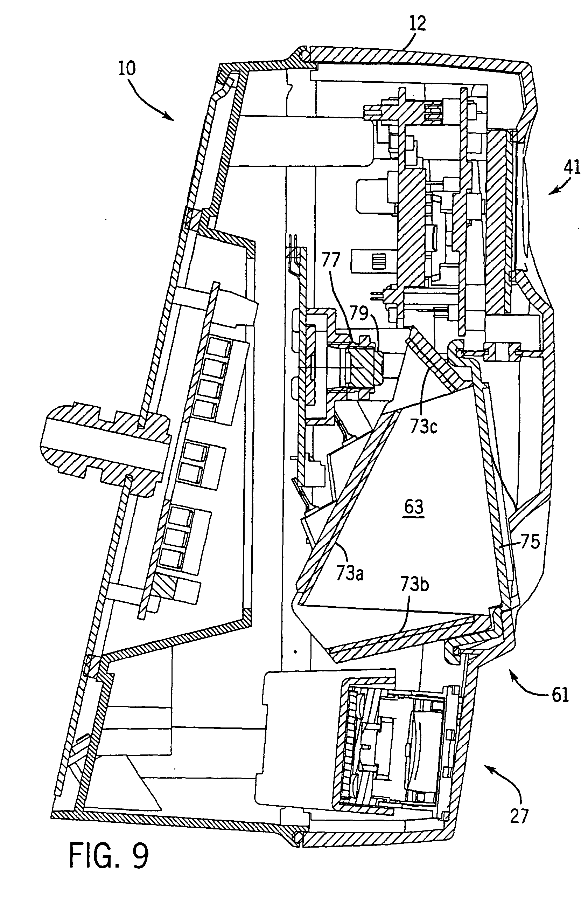

Fig. 8 shows another enlarged exploded view of the interior of the biometric device of Fig.1. The view is taken from a reverse side of housing 12. The figure highlights certain of the assembly components of the data card reader 61 by illustrating those components in exploded fashion. The data card reader shown if for an optical card reader system. A data card reader that can read memory cards and smart cards is contemplated as part of the present invention. The optical data card reader is fully shown and described in a U.S. application entitled "Uniform Data Card Illumination for Optical Reader", serial no. 09/816,972 filed on March 23, 2001, and assigned to the present Assignee, the teachings and disclosures of which are incorporated herein by reference. With reference to Fig. 8, data card reader 61 comprises a mirror box 63 having a PCB 65 with a connector 67 for connecting a data card imager (shown in Fig. 9) to the mirror box 63. An O-ring 69 is disposed between data card reader 61 and housing 12. Further, data card reader 61 includes a glass platen 71. In a preferred embodiment, when using an optical memory card, the barcode preferably faces the glass platen such that the card is fully seated/inserted into slot 14, and when using a smart card or memory chip card, the card is preferably inserted with the chip facing the bottom of device 10.

In Figs. 6-8, certain components of the biometric device are not shown in all of the figures. For example, the FIM shown and described in Fig. 6 is shown only in Fig. 6. It will be understood that this convention is used to facilitate understanding of the drawings. In addition, various fasteners, fittings, and the like, are shown but not described herein, but are attached in a conventional manner.

Fig. 9 shows a cross-sectional view of biometric device 10 showing FIM 27, display assembly 41 and data card reader 61 within housing 12. Data card reader 61 includes mirror box 63. Mirror box 63 includes 3 mirrors 73a-c for reflecting the image of a data card inserted onto surface 75 of mirror box 63. The image of the data card is then reflected to imager 77 through lens 79 where the data card image is processed.

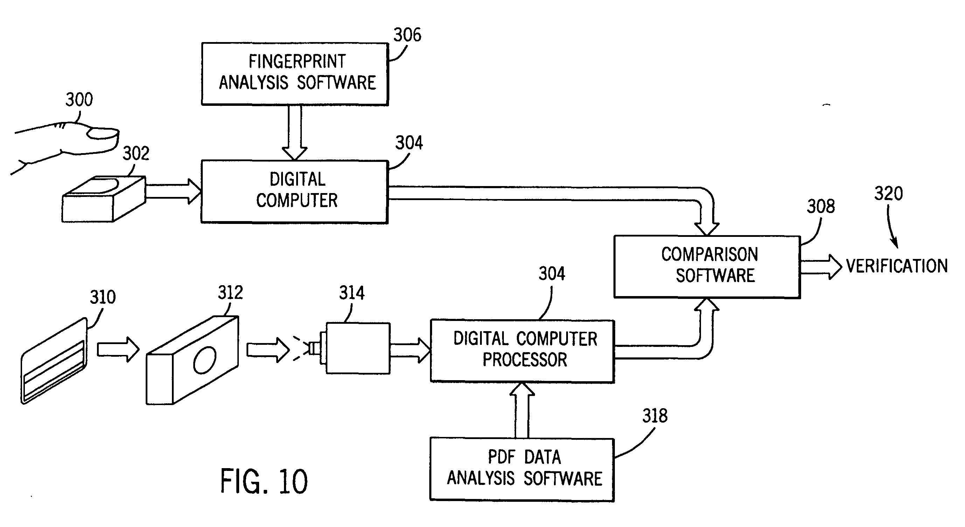

Referring now to Fig. 10, a block diagram illustrates the functionalities of the present invention. A user places a finger 300 onto a fingerprint identification module 302 where the information is transmitted to digital computer 304. Fingerprint analysis software 306 is used with the digital computer 304 in order to assist in an analysis and transformation of the fingerprint image to fingerprint data. Such fingerprint data is transmitted to be compared by comparison software 308. The live fingerprint data is now obtained. The other source of fingerprint data is from a data card 310. As previously described, data card 310 may be an optical memory card (shown here) or a smart card having a smart chip or a memory card having a memory chip. In the optical system, the data card 310 is illuminated by optical system and light source 312 and imaged by an imaging camera 314, typically a CMOS imaging camera with its associated electronics. The image received by the imaging camera 314 is transmitted to a digital computer processor 316, and the stored biometric fingerprint data is read and is transformed (into usable form for comparison) with the assistance of PDF data analysis software 318 (specifically for optical cards). The stored fingerprint data is processed and sent to comparison software 308, which is now able to compare the stored biometric fingerprint data with the live fingerprint data obtained from the user's finger 300. Comparison software 308 then determines whether there is a match between the fingerprint data and the stored fingerprint data in order to make a verification 320.

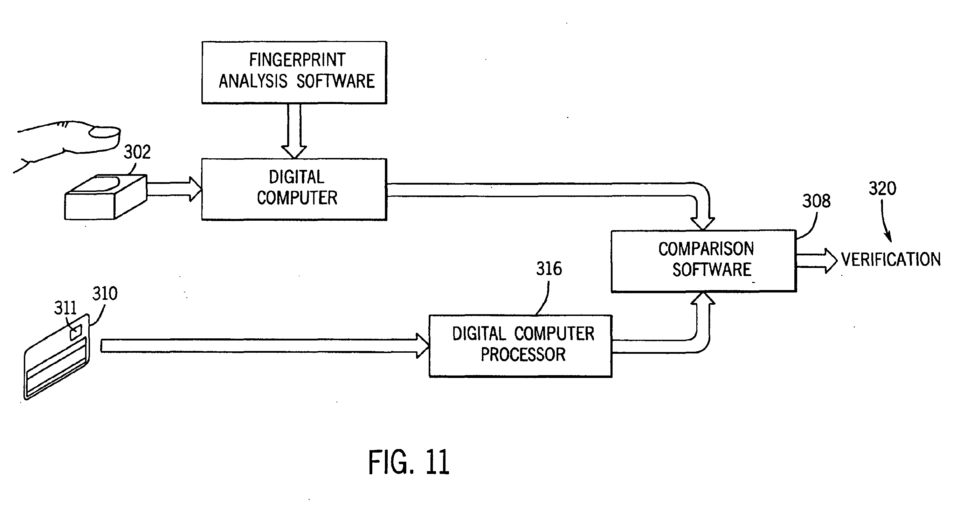

In a variation shown in Fig. 11, data card 310 includes a smart chip or memory chip 311, which is read from and written to by digital computer processor 316. The comparison software 308 is then used as before to determine whether there is a match between the fingerprint data and the stored fingerprint data in order to make a verification 320. The present invention contemplates that the reading of memory cards can also be "upgraded" to the accomplish reading of smart cards by changes in the programming of the various software associated with the memory and smart card reading process.

The verification process is generally used with an application programming interface (API). The API is a generalized instruction set that will expose the capabilities of the FIM to a developer of custom applications. API is a portable interface that can be preferably ported to and compiled on any platform that offers a C compiler for development. This can include all Windows 9x, Windows CE, Geos and Palm operating system environments. Moreover, it is anticipated that any programming language that can make C type calls can be used to develop applications that utilize the API. As contemplated by the present invention, the primary functionality offered via a control will be notification of data card insertion, reading of the data card data, providing a channel to the fingerprint reader to receive a data stream, extracting fingerprint minutia from the data, and comparing the extracted minutia to that stored data, which is retrieved from the data card. Under the umbrella of API and FIM device driver is application specific code. Application specific code is programming code, preferably windows CE, that is specific to the application and/or problem being addressed by the biometric solution system. It includes any user interface code, and any associated logic. Such code could be available off the shelf, such as a standard chip card enrollment program, a simple custom application that resides only in the biometric reader, or third-party integrators could use the API to construct customized or commercial applications.

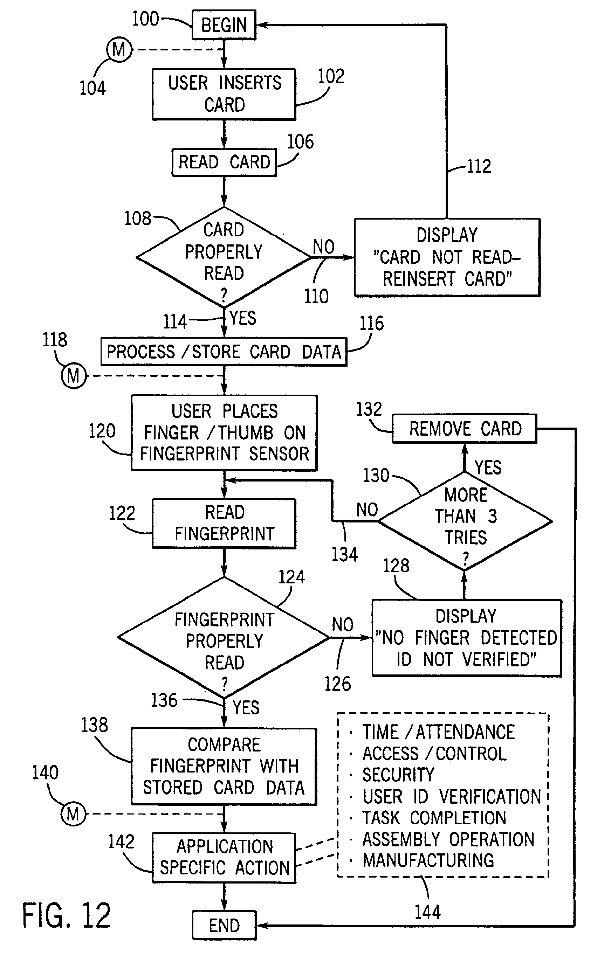

Fig. 12 is a functional block diagram illustrating a method of biometric authentication using the biometric device in accordance with one aspect of the present invention. The device comprises those features and components shown and described above. A user begins 100 the authentication process by inserting a data card 102, for example one of the data cards described previously, following an instruction 104, for example, a message prompt requesting the user to insert the data card. A data card is then received by the biometric device where the biometric stored on the data card is then read 106. A check is made to ensure that the data card can be properly read 108. Potential read errors of the card can result from, for example, improper placement of the card into the device, dirt or other debris on the card itself, or in the case of an optical card, where the ambient light level is too high. Additionally, an error will typically result if the card was enrolled in a different system. If the data card cannot be read properly 110, then a display message, for instance "CARD NOT READ REINSERT CARD" can be provided to the user and the card insertion procedure 112 repeated. If the card can be properly read 114, the card data can be processed and stored 116. At this point, a display message 118 requesting that the user place a finger on the fingerprint sensor, can be provided. Next, the user places the finger on the sensor 120 and the finger is imaged or otherwise read 122 to generate live fingerprint data. In a preferred embodiment, the fingerprint data is read 122 after card data is obtained 106. However, it will be understood that such data can be obtained contemporaneously or in the reverse order (i.e., data card data is obtained after live fingerprint data is obtained). A check can then be performed 124 to ensure that the fingerprint is properly read by the sensor. Fingerprint read errors can result, for example, when a finger is improperly placed on the sensor, when a finger is too dry or too damp, or when the sensor contains dirt or other debris. If the fingerprint data is not properly obtained 126, then a display message 128, for example "NO FINGER DETECTED ID NOT VERIFIED" can be provided to the user. If a fingerprint read error is detected by the device more than a prescribed number of times 130, for example three times, then the user can be instructed to remove the data card 132 and begin 100 the process again. If the fingerprint read error is detected but is less than the prescribed number of times 134, then the device can attempt to again read a user's finger. If the fingerprint is read properly 136, then a comparison can be made 138 between the live fingerprint data (from the fingerprint sensor) to the stored fingerprint data (from the data card). A determination can then be made whether or not there is a match between the live fingerprint data and the data card fingerprint data and the result displayed 140 to the user. If there is no match, the process can begin again.

Where a match exists between the live fingerprint data and the stored data card data, an application specific action can be undertaken 142 by the device. Such application specific actions 144 can include: time and attendance records, access and control of facilities, and security measures to prevent unauthorized entrance. There can be also be actions 144 that include simple user identification and verification to generate a record of those passing into a given situation, such as a classroom, etc. Additionally, other custom actions 144 can include signaling the completion of a task, where a record can be sent from the biometric device when a given task has been satisfied, such as an assembly operation, or other manufacturing application. The custom application can be utilized wherever there is a desire for a biometric digital signature, to create a "biometrics anywhere" solution.

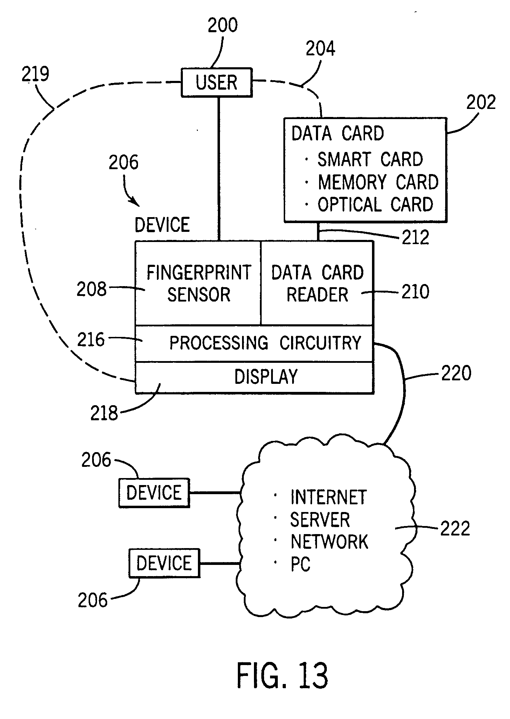

Referring to Fig. 13, a functional diagram is shown of a biometric network according to one aspect of the present invention. In the network, a user 200 goes through the process of enrollment, or the process of collecting biometric samples from a person such that the data can be stored for comparison to a live biometric sample of user 200. Such data is stored on a data card 202, which can take many forms, including a smart card capable of reading, writing, and computational capabilities, a memory card having read/write capabilities, or an optical card having read only data such as a 2D bar code encoding fingerprint data. The optical data can also include image data, such as a photo image. In many cases, user 200 can be in possession of the data card 202, but it is also contemplated by the present invention that the data card can reside at a particular location or destination, with other data cards of similarly enrolled users such as end user 200. For a specific application (e.g., multiple location user verification), it can be desirable for end user 200 to retain possession of data card 202. Regardless, data card 202 represents stored biometric information of user 200 and therefore there is a biometric link 204 between data card 202 and user 200.

In the present invention, biometric device 206 comprises a data card reader 210 and a fingerprint identification sensor 208. Device 206 receives information stored on data card 202 through connection 212 (for example, by directly reading the data card 202). Alternatively, information contained on the data card can be preprogrammed into the device. Also, and although not shown, it is contemplated that information contained on data card 202 can be wirelessly transmitted to device 206. Fingerprint identification sensor 208 reads a live biometric sample provided by user 200. Extraction then occurs. Extraction is the process of converting the captured biometric sample into biometric data so that the biometric data can be compared to the data on data card 202. Extraction and data comparison occur using various processing circuitry 216 (discussed previously with respect to Figs. 6-8). Various screen displays 218, for example the screen displays illustrated in Figs. 3-5 can be communicated to a viewer, such as user 200, as indicated by dashed connection 219.

Information can be transmitted via a connection 220, for example a standard or wireless connection 220, to and/or over a network 222. The network can include the Internet, a host server which can be a part of a network, or simply a resident personal computer (PC), and the network can comprise additional biometric devices, also indicated by the numeral 206.

The occurrence of a match or non-match upon comparison of the biometric data to the data card data will allow the device to perform custom specific functionalities. The above network and network components can be fashioned to create various custom applications as described above and such varying arrangements, as well as replication of the above model in a wide system, can be utilized to effect such customized applications.

The biometric devices of the present invention (also referred to as Combi-devices) can be connected to a Security Server using either RS-232 or RS-485 communications.

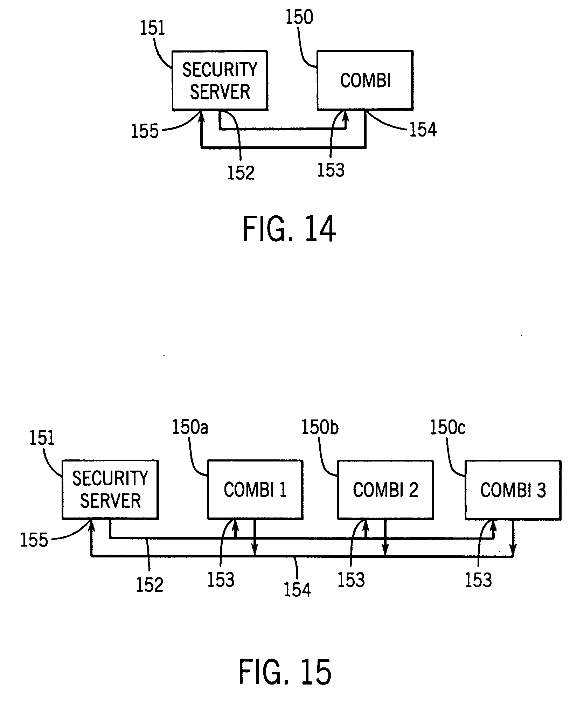

Referring now to Fig. 14, an RS-232 Communications scheme (or simply "RS-232") is shown. When using RS-232, only a single Combi-device can be attached to a serial port. The transmit output 152 of a server 151 is connected to a receive input 153 of the Combi 150, and the transmit output 154 of the Combi 150 is connected to the receive input 155 of the server 151. Both the server and the Combi-device drive their respective transmit paths at all times. When not transmitting a data stream, each holds its transmit path in the marking state, as is the norm for asynchronous communications.

Referring now to Fig. 15, an RS-485 Communications scheme ( or simply "RS-485") is shown- With RS-485 communications, up to 32 devices can be connected to a single port- The transmit output 152 of the server 151 is connected to the receive input 153 of each attached Combi-device 150a-c, and the receive input 155 of the server 151 is connected to the transmit output 154 of each Combi-device 150a-c. The devices are attached in a "daisy chain" (connected in parallel). That means that each device sees all of the information transmitted from the host but sees none of the transmissions from the other Combi-devices. Each of the data paths are biased and terminated so that they are maintained in the marking state when no drive is enabled on the path.

The server may enable its transmit output continuously, or it may choose to only enable its transmit output when it is actually transmitting a message. The server receives from whichever Combi-device has enabled its output driver and is transmitting. Higher-level protocols prevent simultaneous transmission from more than one Combi-device.

The present invention has been described in terms of the preferred embodiment, and it is recognized that equivalents, alternatives, and modifications, aside from those expressly stated, are possible and within the scope of the appending claims.

## Claims

1. A biometric device comprising:
a housing having a slot to receive a data card having stored biometric data thereon;
a data card reader within the housing;
a fingerprint identification module within the housing to generate live biometric data;
a display integral with the housing;
electronic storage and processing circuitry; and
software programmed into the electronic storage and processing circuitry to process the stored biometric data and the live biometric data and to communicate among the data card reader, the fingerprint identification module and the display.

2. The biometric device of claim 1 further including at least one button that, when pressed, provides additional functionalities to the display during operation of the biometric device.

3. The biometric device of claim 2 wherein there are two buttons, wherein when each button is pressed a different functionality is provided, and when both buttons are pressed a third functionality is provided.

4. The biometric device of claim 1 wherein the housing includes a recess and wherein the fingerprint identification module is located within the recess.

5. The biometric device of claim 4 wherein the recess is semi-parabolic.

6. The biometric device of claim I wherein the data card reader includes an optical reading system for reading optical data on an optical card.

7. The biometric device of claim 6 wherein the optical data is a two-dimensional bar code symbol.

8. The biometric device of claim 6 wherein the optical data is a photo image.

9. The biometric device of claim 1 wherein the electronic storage and processing circuitry is capable of reading and processing data from and writing data to a memory chip.

10. The biometric device of claim 9 wherein the memory chip is on a memory card.

11. The biometric device of claim 1 wherein the electronic storage and processing circuitry is capable of reading and processing data from and writing data to a smart card chip.

12. The biometric device of claim 11 wherein the smart card chip is on a smart card.

13. The biometric device of claim 1 wherein the stored and live biometric data is fingerprint data.

14. A biometric verification system comprising:
a data card having stored fingerprint data representative of at least one fingerprint;
a data card reader for reading the data card;
a fingerprint identification module for generating an image of a scanned fingerprint and generating data representative of the scanned fingerprint;
a processor in operational association with the data card reader and the fingerprint identification module for determining whether the data representative of the scanned fingerprint matches the stored fingerprint data representative of the at least one fingerprint.

15. The biometric system of claim 14 wherein the data card is one of a smart card, a memory card and an optical card having an optical bar code for storing the fingerprint data representative of the at least one fingerprint.

16. The biometric system of claim 14 wherein the stored fingerprint data is stored on a chip located on the data card.

17. The biometric system of claim 14 wherein determination of the match between the scanned fingerprint data and the stored fingerprint data card enables biometric identification or verification of the user.

18. The biometric system of claim 14 wherein the biometric device generates user information, the user information selected from the group consisting of user entry time, user exit time, user check-in time and user attendance.

19. The biometric system of claim 14 wherein the biometric device generates information to selectively grant a user access to a desired location or control of a desired device.

20. The biometric system of claim 14 wherein the biometric device generates information to identify or verify an identity of a user.

21. A biometric device comprising:
a housing including a biometric read surface;
a biometric sensor within the biometric read surface for reading of live biometric samples to generate live biometric data;
the housing further including a space to receive a biometric data storage device having stored biometric data to be compared with the live biometric data generated by the biometric sensor; and
processing circuitry to process and compare the live biometric data and the stored biometric data from the biometric data storage device.

22. A biometric device comprising:
a housing;
a biometric reader within the housing for reading stored fingerprint data;
a fingerprint module within the housing having a fingerprint sensor for reading a fingerprint and generating fingerprint data; and
electronic circuitry associated with the fingerprint module and connected to the fingerprint sensor to process and match the fingerprint data with the stored fingerprint data.

23. A biometric device for use with a smart card having stored fingerprint data thereon comprising:
a housing including a smart card slot for receiving the smart card;
a smart card reader for reading the smart card;
a fingerprint module within the housing having a fingerprint sensor for reading a fingerprint and generating fingerprint data; and
electronic circuitry associated with the fingerprint module and connected to the fingerprint sensor to process the fingerprint data and comparing the fingerprint data with the stored fingerprint data.

24. A biometric system comprising:
a data card having stored fingerprint data thereon; and
a biometric device comprising:
a housing including a data card slot for receiving the data card;
a data card reader within the housing for reading the data card;
a fingerprint module having a fingerprint sensor for reading a fingerprint and generating live fingerprint data; and
electronic circuitry associated with the fingerprint module and connected to the fingerprint sensor to process and compare the stored fingerprint data and the live fingerprint data.

25. The biometric system of claim 24 wherein the data card is one of a smart card, a memory card and an optical card having an optical bar code for storing the fingerprint data.

26. The biometric system of claim 24 wherein the stored fingerprint data is stored on a chip located on the data card.

27. The biometric system of claim 24 wherein determination of the match between the live fingerprint data and the stored fingerprint data on the data card enables biometric identification or verification of the user.

28. The biometric system of claim 24 wherein the biometric device generates user information, the user information selected from the group consisting of user entry time, user exit time, user check-in time and user attendance.

29. The biometric system of claim 24 wherein the biometric device generates information to selectively grant the user access to a desired location or control of a desired device.

30. The biometric system of claim 24 wherein the biometric device generates information to identify or verify an identity of the user.

31. A biometric identification module comprising:
a housing;
a biometric sensor exposed through the housing for obtaining user biometric data;
a receiving portion integral with the housing that is receptive to a biometric data storage device having stored biometric data;
electronic processing and storage circuitry disposed within the housing and connected to the biometric sensor to compare the user biometric data to the stored biometric data.

32. The biometric identification module of claim 31 further comprising an application program interface programmed into the processing and storage circuitry and wherein the application program interface is compatible with additional programming to obtain application specific output and functionalities for the biometric identification module.

33. The biometric identification module of claim 31 wherein the stored biometric data and the user biometric data are fingerprint data.

34. A biometric device for use with a data card having biometric data stored thereon comprising:
a housing having a slot to receive the data card therein and including a fingerprint sensor recess and a data card recess on the housing;
a data card reader within the housing, the data card reader capable of receiving a data card therein, the data card recess generally shaped to promote insertion of the data card into the data card reader such that substantially the entire data card may be inserted into the data card reader;
a fingerprint identification module including a fingerprint sensor disposed within and at least partially exposed through the housing such that the fingerprint sensor is accessible through the housing at substantially the bottom of the recess, the recess generally shaped to promote placement of a user finger on the fingerprint sensor to generate live fingerprint data;
a display connected to the housing;
electronic storage and processing circuitry;
software programmed into the electronic storage and processing circuitry to compare the stored biometric data and the live biometric data communicate and to facilitate communication among the data card reader, the fingerprint identification module and the display.

35. The biometric device of claim 34 further comprising a pair of functionality buttons exposed through the housing to permit additional functionalities for the display when at least one of the pair of functionality buttons are pressed.

36. A fingerprint verification device for use with a user finger and a data card having stored fingerprint data comprising:
a housing having a data card slot therein;
a fingerprint sensor in contact with the housing to receive the user finger and generate live fingerprint data;
a data card reader disposed within the housing and in alignment with the data card slot to receive the data card and read the stored fingerprint data;
processing circuitry in electrical contact with the fingerprint sensor and the data card reader to receive and compare the stored fingerprint data to the live fingerprint data; and
an indicator in operational association with the processing circuitry to indicate when and if a match is made between the stored fingerprint data and the live fingerprint data.

37. A biometric network comprising:
a plurality of biometric devices, each biometric device comprising:
a housing;
a data card reader within the housing including a portion adapted to receive and read a data card having electronic fingerprint information; and
a fingerprint module including a fingerprint sensor for reading a user fingerprint placed onto the fingerprint sensor, wherein the biometric is capable of determining a match between the user fingerprint read from the fingerprint sensor and the electronic fingerprint information; and
a server having a connection to each of the plurality of biometric devices to receive data from each of the plurality of biometric devices.

38. The biometric network of claim 37 wherein the server is connected to the Internet.

39. A biometric system comprising:
a data card having biometric data thereon; and
a biometric device comprising:
a housing having a slot to receive the data card therein and including a fingerprint sensor recess and a data card recess on the housing;
a data card reader within the housing, the data card reader capable of receiving a data card therein, the data card recess generally shaped to promote insertion of the data card into the data card reader such that substantially the entire data card may be inserted into the data card reader;
a fingerprint identification module including a fingerprint sensor disposed within and at least partially exposed through the housing such that the fingerprint sensor is accessible through the housing at substantially the bottom of the fingerprint sensor recess, the fingerprint sensor recess generally shaped to promote placement of a user finger on the fingerprint sensor to generate live fingerprint data;
a display connected to the housing;
electronic storage and processing circuitry;
software programmed into the electronic storage and processing circuitry to compare the stored biometric data and the live biometric data communicate and to facilitate communication among the data card reader, the fingerprint identification module and the display.

40. A method of biometric authentication comprising the steps of:
providing a biometric device having a housing with a slot, a fingerprint sensor, a data card reader and electronic circuitry to process fingerprint data, and a display:
receiving a data card having stored fingerprint data into the slot;
reading the stored fingerprint data on the data card with the data card reader;
receiving a finger onto the fingerprint sensor;
imaging the finger to generate live fingerprint data;
comparing the stored fingerprint data to the live fingerprint data; and
determining whether there is a match between the stored fingerprint data and the live fingerprint data.

41. The method of claim 40 further including the step of displaying an instruction on the display to insert the data card.

42. The method of claim 40 further including the step of displaying an instruction on the display for a user to place the finger on the fingerprint sensor.

43. The method of claim 40 further including the step of displaying a message on the display that a user has been verified.

44. The method of claim 40 further including the step of displaying a message on the display that a user has not been verified.

45. A method of biometric authentication comprising the steps of:
providing a biometric device having a housing with a slot, a fingerprint sensor, a data card reader and electronic circuitry to process fingerprint data, and a display;
requesting, via the display, the insertion of a data card into the data card reader;
receiving the data card having stored biometric data into the slot;
reading the biometric data stored on the data card;
requesting, via the display, the placement of a finger on the fingerprint sensor;
receiving the finger onto the fingerprint sensor;
imaging the finger to generate live fingerprint data;
comparing the live fingerprint data to the stored biometric data with the electronic circuitry;
determining whether there is a match between the live fingerprint data and the stored biometric data;
displaying whether the match was made as a result of the determining step.

46. The method of claim 45 wherein the step of requesting that the user place a finger on the fingerprint sensor occurs after and only if the step of reading the biometric data stored on the data card occurs successfully.

47. The method of claim 45 further including the step of resetting the biometric device.

48. The method of claim 45 further including the step of resetting the biometric reader to reread the data card when a functionality button on the housing is pressed.

49. The method of claim 45 further including the step of displaying information when a functionality button on the housing is pressed.

50. The method of claim 45 further including the step of resetting the biometric reader when both a first functionality button and a second functionality button on the housing are pressed.

51. The method of claim 45 further comprising the step of selectively allowing the user access to a desired location or control of a desired device access as a result of the determining step.

52. The method of claim 45 further comprising the step of selectively generating user information, the user information selected from the group consisting of user entry time, user exit time, user check-in time and user attendance as a result of the determining step.

53. The method of claim 45 further comprising the step of selectively generating information to identify or verify an identity of the user as a result of the determining step.
